# EUROPEAN PATENT APPLICATION

(11) **EP 1 829 810 A1**
(43) Date of publication of application: **05.09.2007**
(21) Application number: 05820341.5
(22) Date of filing: 20.12.2005
(51) Int. Cl.: B66C 13/08, B65G 63/00, B66C 13/48

(54) **CRANE CONTROL DEVICE**

(30) Priority: 20.12.2004 JP 2004368226
(71) Applicant: Mitsubishi Heavy Industries, Ltd., Minato-ku Tokyo 108-8215 (JP)
(72) Inventor: MONZEN, Tadaaki, Mitsubishi Heavy Industries, Ltd., Hiroshima-shi, Hiroshima, 7338553 (JP); UCHIDA, Koji, Mitsubishi Heavy Industies, Ltd., Hiroshima-shi, Hiroshima, 7338553 (JP); YOSHIOKA, Nobuo, Mitsubishi Heavy Industries, Ltd., Hiroshima-shi, Hiroshima, 73338553 (JP); FUJISAWA, Noboru, Mitsubishi Heavy Industries, Ltd, Hiroshima-shi, Hiroshima, 7338553 (JP)
(74) Representative: Jorio, Paolo
(86) International application number: PCT/JP2005/023339
(87) International publication number: WO 2006/068125

(57) **Abstract**

There is provided a yard crane control device capable of automatically detecting the inclination of a yard and accurately stacking containers. The yard crane control device for a yard crane that transports containers has: an inclinometer 41 which is provided on a spreader for suspending a container; a limit switch (landing detection device)27 which detects a landing state and a fixation state of the spreader in relation to the container; and a database (slope data storage device) 51 which stores the detection result of the inclinometer 41 in a state where the limit switch 27 detects that the spreader has landed on the container, in relation to a storage area location in the container yard where the containers are stored.

## Description

### Technical Field

The present invention relates to a yard crane control device, which, in a container yard where a number of boxshaped containers are stored, within a port or a harbor for example, transports the containers.

### Background Art

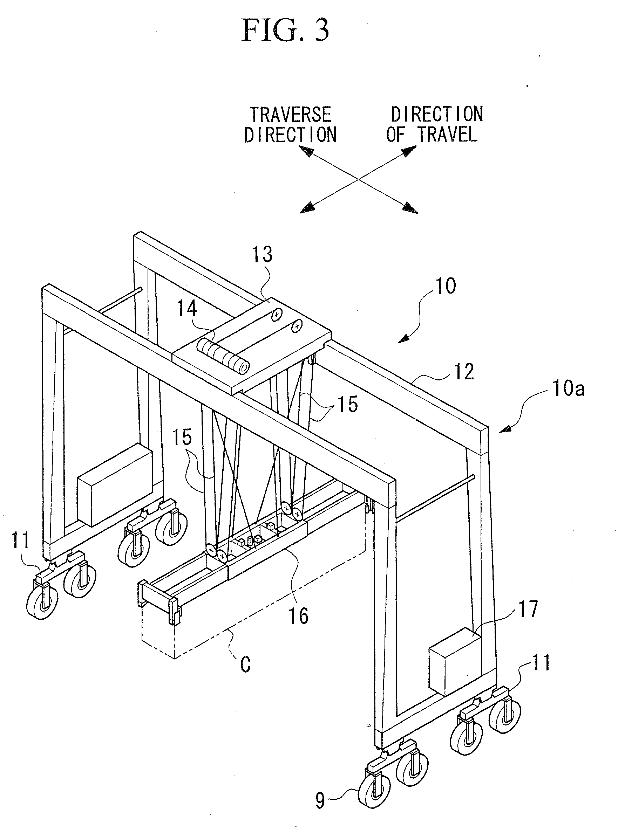

In a container yard at a port, a harbor, or the like, cranes perform handling such as loading containers onto ships or trailers, and unloading containers from ships or trailers.
An example of a crane used for this handling will be described using FIG. 3.
Reference symbol 10 in FIG. 3 denotes a yard crane (referred to hereunder as a crane) that stacks a container C, being a suspended load, on a target container.
The crane 10 is a tire type gantry crane that stacks containers, and has a traveling crane body 10a that travels on a trackless surface via wheeled traveling devices 11, which are fitted with tires 9. The wheeled traveling devices 11 are provided at the front and back of the crane 10, and movement traveling inside lanes, and movement traversing between lanes, are possible.

A traverse trolley 13 is provided on a horizontal upper beam 12 of the traveling crane body 10a, which moves horizontally along the upper beam 12. Hoist gear 14 is mounted on the traverse trolley 13. A container suspension device (spreader) 16 is suspended by a suspension cable 15, which is hoisted and fed by the hoist gear 14. The suspension device 16 can hold the container C, being a suspended load, such that it can be engaged or disengaged.
Furthermore, the traveling crane body 10a is provided with a travel control unit 17 which performs travel control of the yard crane 10.

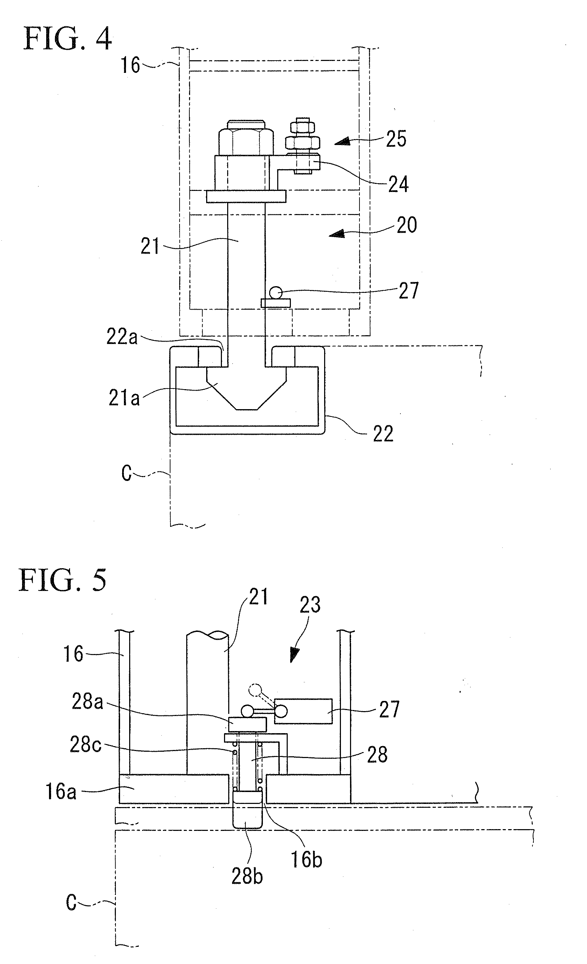

FIG. 4 shows a locking pin device 20 provided on the spreader 16 to hold the container C. The locking pin device 20 which is provided at the corners of the spreader 16, comprises; a locking pin 21 which is suspended such that its movement in the vertical direction is constrained and such that it can be rotated freely, a locking section 22 which is provided at the corners of the container C facing the locking pin 21, and into which the end 21a of the locking pin 21 is inserted, and a rotation mechanism 25 which rotates the locking pin 21.

A narrow pin slot 22a is provided in the locking section 22. After the spreader 16 is lowered and the locking pin tip 21a is inserted into the pin slot 22a, by driving a hydraulic cylinder (not shown in the figure) to operate a rotation mechanism 25, and rotating the locking pin 21 via an arm 24 connected with the rotation mechanism 25, the container C is locked to or unlocked from the spreader 16 via the locking pin 21. Furthermore, a landing detection device is provided at the corners of the spreader 16 in order to verify the locking state of the locking pin 21.

As shown in FIG. 5, a landing detection device 23 is positioned close to the locking pin 21, and comprises; a detection rod 28 which moves vertically inside a through hole 16b that opens to the bottom 16a of the spreader 16, and a limit switch (landing detection device) 27 which detects the movement of the detection rod 28.
The tip 28b of the detection rod 28 protrudes from the bottom of the spreader at normal times (when in an unloaded state) due to a spring 28c. When the spreader 16 is lowered, approaching the top face of the container C, and makes contact with it, the detection rod 28 is pushed up. After the movement is detected by the limit switch 27, and landing is confirmed, the locking pin 21 is locked.

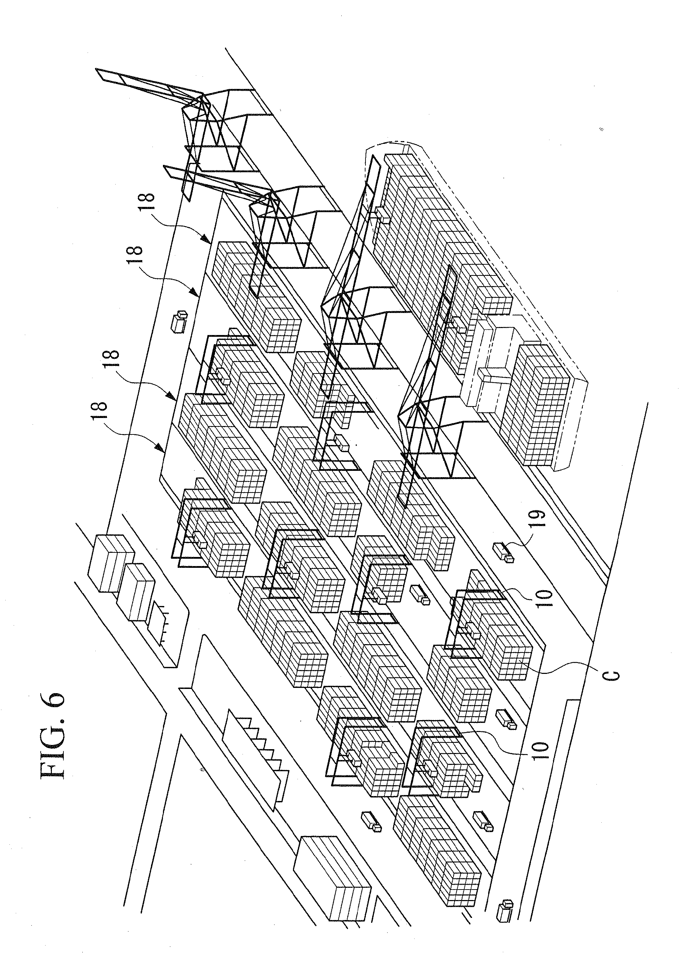

FIG. 6 shows a container yard in which such a crane is used. A plurality of lanes 18 is provided in the container yard, and one or more cranes 10 is provided in each lane 18. By moving in each of the lanes 18, the cranes 10 load desired containers C in the container yard onto vehicles 19, or unload the containers C in the container yard from the vehicles 19.
Patent Document 1:
   Japanese Unexamined Patent Application, Publication No. Hei 5-40813
Patent Document 2:
   Japanese Unexamined Patent Application, Publication No. Hei 11-157485

### Disclosure of Invention

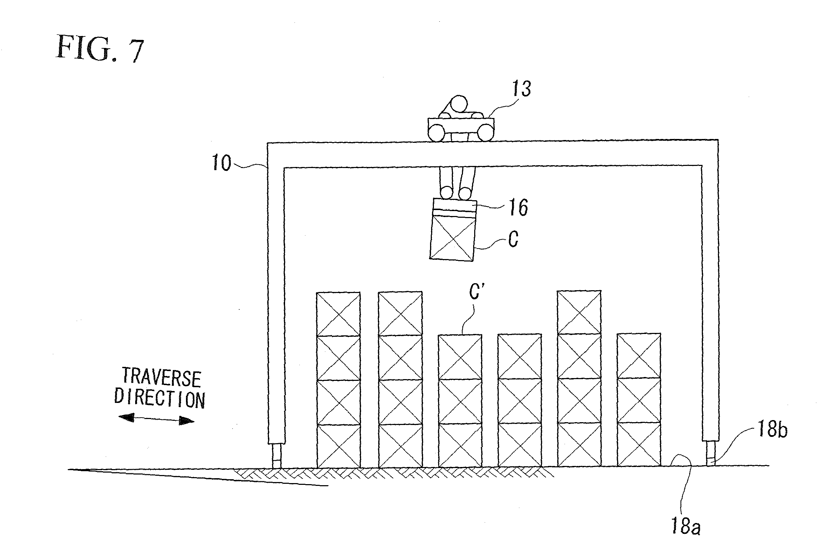

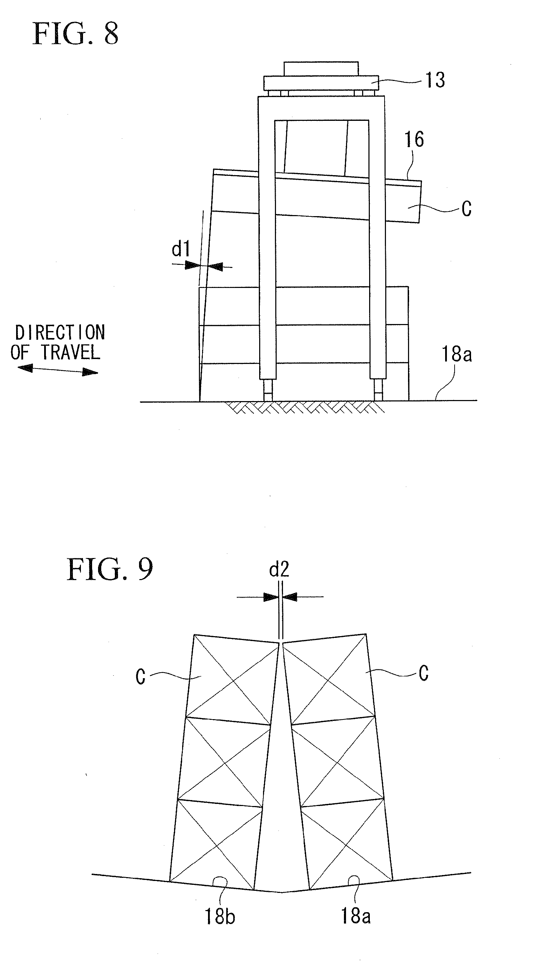

In the container yard, ramps are provided for drainage in the storage areas (central areas in the widthwise direction of lanes 18) where the containers C are stacked and the crane travel areas (areas provided on the two sides in the widthwise direction of the storage areas in the lanes 18). The ramps vary due to unevenness at each location, or due to uneven settling occurring after the construction of the container yard.
For example, if the storage area 18a slopes in the traverse direction (horizontal direction in FIG. 7) as shown in FIG. 7, the container C that the spreader 16 holds cannot be parallel to a container C' stacked in the storage area 18a. Therefore, there is a case in which, when the suspended container C is landed on the container C' in the storage area 18a, part of the container C touches before the rest, so it rolls.
Moreover, in the case where the storage area 18a slopes in the direction of travel as shown in FIG. 8, similar rolling of the container occurs, and in addition, if the angle of slope in the direction of travel (horizontal direction in FIG. 8) increases, the position of the container on the top shifts in the direction of travel as the height of the stack increases (refer to reference symbol d1 in the figure). That is, fine adjustment of the crane travel position is necessary as stacking proceeds, which has an adverse effect on the handling efficiency.
Furthermore, if as shown in FIG. 9, the slope of the storage areas 18a and 18a are different, a gap d2 between adjacent containers is less than or equal to a predetermined amount (400mm) that must be ensured for the movement of the spreader 16, and it is difficult to insert the spreader 16 in the gap d2, which makes handling difficult.
Due to such reasons, a lot of expertise is required in order to land the containers C manually, and in order to land the containers C automatically, there is a problem in that it is difficult to deal with the case where the angle of slope is large.

The present invention has been made in consideration of the above circumstances, with an object of providing a yard crane control device that can detect the slope of the yard automatically, and can stack containers accurately.
The present invention uses the following means in order to solve the above problems.
The present invention provides a yard crane control device for a yard crane that suspends containers using a spreader and transports them in a container yard, comprising: an inclinometer which is provided on the spreader to detect the slope of the spreader; a landing detection device which detects a landing state of the spreader in relation to the container; and a slope data storage device which stores the detection results of the inclinometer when the landing detection device detects that the spreader has landed on the container, in relation to a storage area location in the container yard where the containers are stored.

In the present invention, it is possible to detect the slope of each storage location in a container yard, each of which may be different from the slope of the yard crane itself. The slope data (data of slope angle and slope direction) stored in the slope data storage device are used in manual or automatic control of the yard crane when containers are transported. By so doing, it is possible to transport containers reliably. Furthermore, the slope data stored in the slope data storage device can be updated progressively.

In the above invention, it is preferable to provide a central control unit that controls the trim and the list of the spreader such that it is parallel to the storage area where the container is stacked, based on the slope data stored in the slope data storage device.

In this case, according to the slope of the container yard storage area where the stacking takes place, the central control unit controls the trim and the list of the spreader such that the container to be stacked is parallel to the storage area where it is to be stacked. Accordingly, the whole container to be stacked can touch the ground at almost the same time, thus making it possible to prevent the container from rolling.

In the above invention, it is preferable to provide a central control unit that calculates the location along the direction of travel of a top container in the storage area where the container is stacked, based on the slope data stored in the slope data storage device, and corrects the direction of travel and the location of the yard crane.

When the container is stacked on a yard that slopes in the direction of travel, the position of the top container shifts in the direction of travel as the height of the stack increases. Therefore, as described above, by the central control unit calculating the deviation based on the slope data, and correcting the travel distance, it is possible to improve the accuracy of the container storage location. Here, the number of containers in the stacks of containers in the storage area may be controlled by the central control unit.

In the above invention, it is preferable to provide a central control unit that calculates the distance of the spacing between the container onto which a container is stacked and the adjacent container, based on the slope data stored in the slope data storage device.

If the slope of the storage area is not uniform, when the number of containers stacked is increased, the spacing between adjacent containers becomes less than or equal to a predetermined value. Therefore, as described above, by the central control unit calculating the decrease in spacing between adjacent containers, it is possible to have the central control unit perform processes such as limiting the number in the stack, triggering an alarm, and the like, which helps to avoid the danger of containers colliding.

In the above invention, it is preferable that a central control unit that controls a plurality of the abovementioned yard cranes is provided, and that the detection result of the inclinometer is transmitted to the central control unit from the plurality of yard cranes, and that the plurality of yard cranes is controlled by the central control unit.

In this case, the slope of each storage area location in the whole container yard is managed by the central control unit, and all of the yard cranes are controlled collectively by the central control unit.

In the present invention, the following effects can be obtained.
By detecting the slopes of the container yard automatically, and storing and updating them in a database, it is possible to eliminate the need to measure the slopes manually. Furthermore, based on the database, it is possible to control the spreader reliably when stacking the containers, and it is possible to correct the location of the spreader automatically, thus making it possible to improve the handling efficiency.

### Brief Description of Drawings

[FIG. 1] is a block diagram of a yard crane control device according to the present embodiment.
[FIG. 2] is a diagram showing the slope of a spreader when a container is landed.
[FIG. 3] is a perspective view of a yard crane.
[FIG. 4] is a longitudinal sectional view showing a locking pin device provided on the spreader.
[FIG. 5] is a longitudinal sectional view showing a limit switch of the locking pin device as shown in FIG. 4.
[FIG. 6] is a perspective view showing the whole container yard.
[FIG. 7] is a diagram showing the slope of the storage area in the traverse direction.
[FIG. 8] is a diagram showing the slope of the storage area in the direction of travel.
[FIG. 9] is a diagram showing non-uniform slopes in the storage area.

### Best Mode for Carrying Out the Invention

Next is a description of an embodiment of the present invention with reference to the drawings.

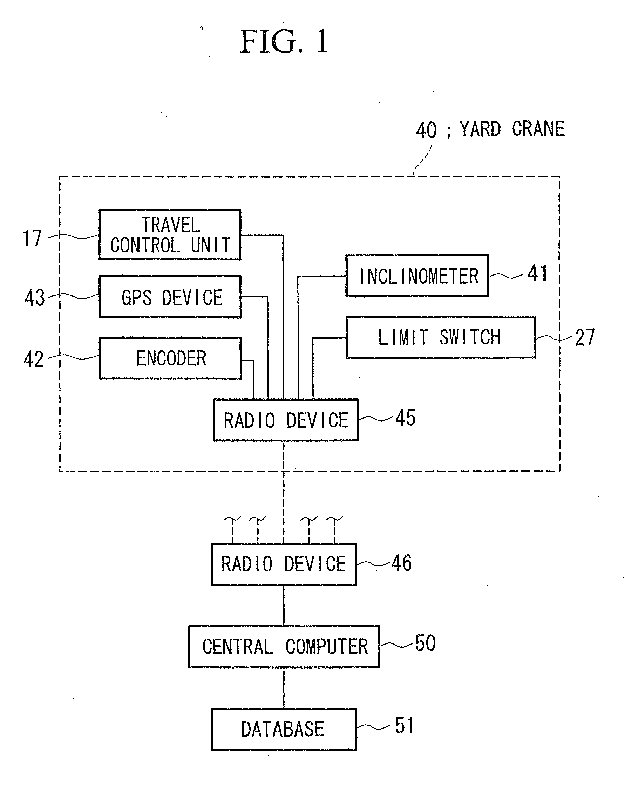

FIG. 1 is a block diagram of a yard crane control device according to the present embodiment. The schematic structure of a yard crane 40 of the present embodiment is the same as the above described conventional crane 10, and the same reference symbols are used for the same structures, and hence the descriptions are omitted.
In FIG. 1, the component denoted by reference symbol 41 is an inclinometer fixed to the spreader 16. The inclinometer 41 detects the slope (angle of slope and direction of slope) of the spreader 16, and a liquid surface type one or gravity-type one can be used.
In FIG. 1, the component denoted by reference symbol 42 is a traverse encoder for detecting the amount of traverse of a tire 9, and the component denoted by reference symbol 43 is a GPS (global positioning system) device for detecting the position of a crane in a container yard using radio waves from GPS satellites. Furthermore, the component denoted by reference symbol 50 is a central computer (central control unit) on the container yard side. The components denoted by reference symbols 45 and 46 are radio devices for receiving and sending data between the crane and the central computer 50 on the container yard side. The central computer 50 is constructed such that it accesses a database (slope data storage device) 51 where slope data of the container yard are stored. Furthermore, the central computer 50 controls the travel of a plurality of the cranes 40 provided in the container yard, by controlling a plurality of travel control units 17 via the radio devices 45 and 46. Moreover, the central computer 50 controls the number of containers stacked in each storage area location.

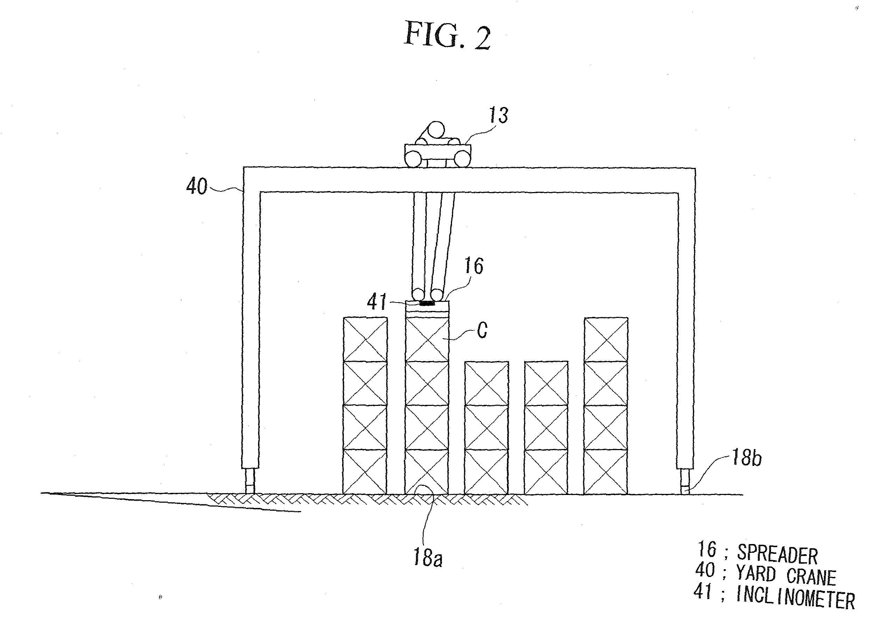

In the yard crane control device constructed as above, when landing a spreader 16 on a container C; the output of the inclinometer 41 when the limit switch 27 is turned on (that is, when the spreader 16 lands on the container C), the traverse location of the yard crane 40 detected by the traverse encoder 42, and the travel position of the yard crane 40 detected by the GPS device 43, are input to the central computer 50 via the radio devices 45 and 46. As shown in FIG. 2, at the time that the spreader 16 that holds the container C stacked on a storage area 18a lands on the container C, the slope of the spreader 16 is equal to the slope of the storage area 18a in which the container C is stacked. That is, at the time that the spreader 16 lands on the container C and the limit switch 27 is turned on, the slope detected by the inclinometer 41 can be regarded as the slope of the storage area 18a.
The central computer 50 stores the slope in the database 51 in relation to the coordinates of the storage location. By doing this repeatedly, a database indicating the angle of the slope at each storage area location in the container yard is accumulated and updated.

The database 51 is used as follows.
The database 51 is used for a function for automatically adjusting the trim (angle of the spreader in the direction of travel) and list (angle of the spreader in the traverse direction) in relation to the slope of the storage area 18a and the slope of the crane traveling area 18b. That is, the central computer 50 reads the slope data of the location where the stacking takes place from the database 51, and adjusts the suspension amount of the right and left of the spreader 16 via the radio devices 45 and 46 such that the suspended container C is parallel with the containers that are stacked in the storage area 18a while landing the container C that is held. Accordingly, it is possible to prevent the container C from rolling when the container is landed.

Furthermore, by adding a crane travel stopping location correction function in relation to the slopes of the storage area 18a and the crane traveling area 18b, and the height of the stack, to the yard crane control device, it is possible to correct mis-location of the container in the direction of travel due to the slopes of the storage area 18a and the crane traveling area 18b in the direction of travel.
As described above, when containers are stacked in a storage area 18a that slopes in the direction of travel, the location of the container on the top shifts in the direction of travel as the height of the stack increases (refer to FIG. 8). In the yard crane control device of the present embodiment, the central computer 50 can improve the container storage location accuracy by calculating the shift based on the slope data, and correcting the travel distance.

Moreover, if the slope in the storage area is not uniform, when the number of stacked containers increases, the gap between adjacent containers becomes less than or equal to a predetermined value (refer to FIG. 9). In the present embodiment, by the central computer 50 calculating the decrease in the gap between adjacent containers, and limiting the number stacked by the yard crane 40 based on that information, it is possible to prevent the gap between containers from reaching the predetermined value or less. Accordingly, it is possible to avoid situations where containers are unable to be stored. Furthermore, in the case where the gap between containers is less than the predetermined value, the central computer 50 may trigger an alarm. This helps to avoid the danger of containers colliding.

Moreover, using this yard crane control device, large variations in the slope of the storage area 18a can be detected. Furthermore, it is possible to devise preventative operational measures such as avoiding, whenever possible, placing containers in locations where the slope varies significantly. Moreover, in the case where the angle of the slope of the storage area 18a exceeds an appropriate value, it is possible to determine that the container yard needs to be repaired. Accordingly, the container yard can be maintained in an appropriate condition.

As described above, using the yard crane control device of the present embodiment, the slope of the container yard can be detected automatically and stored in a database, and variations in the slope can be updated automatically. Accordingly, it is possible to eliminate the need to measure the slope manually.
Furthermore, it is possible to control the spreader 16 to stack containers reliably based on the database, and it is possible to correct shifting of the container location in the direction of travel automatically, which enables the handling efficiency to be improved.

## Claims

1. A yard crane control device for a yard crane that suspends containers using a spreader and transports them in a container yard, comprising:
an inclinometer which is provided on the spreader to detect the slope of the spreader;
a landing detection device which detects a landing state of the spreader in relation to the container; and
a slope data storage device which stores the detection results of the inclinometer when the landing detection device detects that the spreader has landed on the container, in relation to a storage area location in the container yard where the containers are stored.

2. A yard crane control device according to claim 1, wherein there is provided a central control unit that controls the trim and the list of the spreader such that it is parallel to the storage area where the container is stacked, based on the slope data stored in the slope data storage device.

3. A yard crane control device according to claim 1, wherein there is provided a central control unit that calculates the location along the direction of travel of a top container in the storage area where the container is stacked, based on the slope data stored in the slope data storage device, and corrects the direction of travel and the location of the yard crane.

4. A yard crane control device according to claim 1, wherein there is provided a central control unit that calculates the distance of the spacing between the container onto which a container is stacked and the adjacent container, based on the slope data stored in the slope data storage device.

5. A yard crane control device according to claim 1, wherein there is provided a central control unit that controls a plurality of the yard cranes, and the detection result of the inclinometer is transmitted to the central control unit from the plurality of yard cranes, and the plurality of yard cranes is controlled by the central control unit.
